# EUROPEAN PATENT APPLICATION

(11) **EP 4 675 539 A1**
(43) Date of publication of application: **07.01.2026**
(21) Application number: 24306090.2
(22) Date of filing: 02.07.2024
(51) Int. Cl.: G06Q 30/06, G06Q 20/38, G06Q 20/40, G06Q 30/0601

(54) **PAYMENT SYSTEM AND METHOD FOR MANAGING A PAYMENT TRANSACTION**

(71) Applicant: THALES DIS FRANCE SAS, 92190 Meudon (FR)
(72) Inventor: ZENOU, Frédéric, 13012 MARSEILLE (FR); LENGELLÉ, Denis, 83330 LE BEAUSSET (FR); CHRETIEN, Stéphane, 06410 BIOT (FR)
(74) Representative: Grevin, Emmanuel

(57) **Abstract**

The invention is a method for managing a payment transaction in which a merchant server (10) gets payment parameters (21) specific to a payment instrument (20) which is either of a first type for which a dynamic card security code (55) is delivered to the user only after a successful strong customer authentication of the user, or of a second type for which the dynamic card security code is delivered to the user without a successful strong customer authentication. The merchant server requests a 3DS authentication by sending to an ACS (40), an authentication request (101) comprising a subset of payment parameters. The ACS checks if the payment instrument is of the first type by using the subset and, if so decides to continue the payment transaction without performing the 3DS authentication on the payment instrument and sends back an authentication response (402) reflecting an agreement to pursue the payment transaction.

## Description

### (Field of the invention)

The present invention relates to methods for managing a payment transaction using a payment instrument. It relates particularly to methods of managing payment transactions carried out in the field of e-commerce.

### (Background of the invention)

During an e-commerce transaction, funds are electronically exchanged through a website or a dedicated application for buying a product or a service. Such a commerce transaction is conducted using payment parameters (i.e. credentials) assigned to a payment instrument. Usually, these payment parameters are checked by a bank remote server that authorizes or rejects the transaction.

A payment instrument can be a physical payment device like an integrated circuit card which may have a form of a smart card. A payment instrument can also be a digitalized payment card, or a virtual payment card hosted either in a personal device like a smartphone or in a banking server for instance.

The revised Payment Services Directives (PSD2) specify European Union rules aiming at enhancing security of e-commerce transactions, in particular by requiring a strong customer authentication (SCA) relying on a two-factor authentication. A user is usually requested to provide parameters specific to the payment instrument chosen for performing the payment transaction. These specific parameters can include a primary account number (PAN) and a card security code also known as card verification code (CW) . In addition, some e-commerce players implemented the EMV 3-D Secure (3DS) specifications that aims at preventing card-not-present (CNP) fraud and increasing the security of ecommerce payment transactions.

The document US10909530B2 discloses an authentication method in which an authentication server of ACS type blocks performance of the 3DS authentication when it detects a dynamic card verification value in a message requesting a 3DS authentication.

### (Summary of the Invention)

It has been noted that the 3DS out of bound authentication may be a painful experience for customers that perform online payment transactions, especially for customers using a digital or virtual payment card. In such a case, the customer has to access twice the banking application generally hosted on their phone: a first time for getting the payment parameters intrinsic to the payment instrument (like the Primary Account Number known as PAN, the expiry date, or the card security code) that should be entered on the merchant's web site and a second time for performing the authentication requested by the 3DS flow. One of the consequences can be the abandonment of the current purchase. This constitutes an economic loss for sellers/merchants and does not meet customer expectations.

It would be desirable to simplify or make more convenient the procedure for carrying out an online payment transaction from the customer's point of view.

The invention aims at solving the above-mentioned technical problem.

An object of the present invention is a computer-implemented method for managing a payment transaction initiated by a merchant server giving access to a service. During the payment transaction, the merchant server requests payment parameters specific to a payment instrument assigned to a user. The payment instrument is either of a first type for which a dynamic card security code assigned to the payment instrument is delivered to the user only after a successful strong customer authentication of the user based on authentication data provided by the user, or of a second type for which the dynamic card security code is delivered to the user without a successful strong customer authentication of said user. The payment parameters include said dynamic card security code. Upon getting the payment parameters, the merchant server requests a 3Domain Secure (3DS) authentication according to a 3DS protocol by sending an authentication request to an access control server (ACS). The authentication request comprises a subset of said payment parameters. Upon receipt of the authentication request, the access control server checks if the payment instrument is of said first type by using the subset and, if so decides to continue the payment transaction without performing the 3DS authentication on the payment instrument and sends back an authentication response reflecting an agreement to pursue the payment transaction, otherwise the access control server performs the 3DS authentication on the payment instrument.

Advantageously, the access control server may send to a communicating device assigned to said user a consent request requesting a consent of the user to pursue the payment transaction. Upon obtaining said consent, the communicating device may send a confirmation of the consent to the access control server which in turn may generate and include in said authentication response an authentication value.

Advantageously, the consent request may include an inline frame element comprising a message requesting the consent of the user.

Advantageously, upon receipt of the authentication response, the merchant server may send to a bank authorization server an authorization request including both the dynamic card security code and the authentication value. After successfully validating both the dynamic card security code and the authentication confirmation value, the bank authorization server may send a payment approval to the merchant server.

Advantageously, the subset may comprise a primary account number (PAN) and the access control server may check if the payment instrument is of said first type by using the primary account number.

Advantageously, the dynamic card security code may be valid for a predefined period, a limited cumulative sum of money, or a limited number of transactions.

Advantageously, the payment instrument may be a payment chip card, a payment bracelet, a payment ring, a digital payment card hosted by the device or a virtual payment card whose payment parameters are accessible by the user through a card management system.

Another object of the present invention is a payment system comprising an access control server (ACS) and a merchant server giving access to a service and configured to request payment parameters specific to a payment instrument assigned to a user during a payment transaction. The payment instrument is either of a first type for which a dynamic card security code assigned to the payment instrument is delivered to the user only after a successful strong customer authentication of said user based on authentication data provided by the user, or of a second type for which the dynamic card security code is delivered to the user without a successful strong customer authentication of said user. The payment parameters include said dynamic card security code. Upon getting said payment parameters, the merchant server is configured to request a 3Domain Secure (3DS) authentication according to a 3DS protocol by sending an authentication request to said access control server, said authentication request comprising a subset of said payment parameters. Upon receipt of the authentication request, the access control server is configured to check if the payment instrument is of said first type by using said subset and, if so to decide to continue the transaction without performing the 3DS authentication on the payment instrument and to send back an authentication response reflecting an agreement to pursue the payment transaction, otherwise the access control server is configured to perform the 3DS authentication on the payment instrument.

Advantageously, the access control server may be configured to send to a communicating device assigned to said user a consent request requesting a consent of the user to pursue the payment transaction. Upon obtaining said consent, the communicating device may be configured to send a confirmation of the consent to the access control server which, in turn, may be configured to generate and include an authentication value in said authentication response.

Advantageously, the consent request may include an inline frame element comprising a message requesting the consent of the user.

Advantageously, upon receipt of the authentication response, the merchant server may be configured to send to a bank authorization server an authorization request including both the dynamic card security code and the authentication value. After successfully validating both the dynamic card security code and the authentication confirmation value, the bank authorization server may be configured to send a payment approval to the merchant server.

Advantageously, said subset may comprise a primary account number (PAN) and the access control server may be configured to check if the payment instrument is of said first type by using said primary account number.

Advantageously, the dynamic card security code may be valid for a predefined period, a limited cumulative sum of money, or a limited number of transactions.

Advantageously, the payment instrument may be a payment chip card, a payment bracelet, a payment ring, a digital payment card hosted by the device or a virtual payment card whose payment parameters are accessible by the user through a card management system.

Advantageously, the dynamic card security code may be provided either by a bank application hosted in a device of the user, or by the payment instrument.

### (Brief description of the drawings)

Other characteristics and advantages of the present invention will emerge more clearly from reading the following description of a number of preferred embodiments of the invention with reference to the corresponding accompanying drawings in which:
- Fig. 1 shows a flow diagram for managing an online payment transaction according to an example of the invention, and
- Fig. 2 shows a diagram of architecture of a payment system for managing an online payment transaction according to an example of the invention.

### (Detailed description of the preferred embodiments)

The invention may apply to any type of biometric payment instrument usually associated with a user (also called cardholder). The payment instrument may be implemented in a wide variety of portable form factors such as physical chip card, smartwatch, or wearable device like a payment bracelet, a payment ring for instance. The payment instrument may also be implemented as a digital payment card hosted by a personal device of the user or a virtual payment card whose payment parameters are remotely accessible by the user through a card management system.

Some physical payment instruments may be designed to provide the user with all payment parameters intrinsic to the payment instrument (like the Primary Account Number, the expiry date, or the card security code). In the case of a smart card, some of these payment parameters may be printed on the card body and a screen may display a dynamic card security code whose value change periodically according to a preset security rule shared with the server acting on behalf of the bank that issued the payment card.

Some physical payment instruments may be designed to provide the user with all their payment parameters intrinsic to the payment instrument except the dynamic card security code whose value is reachable by the user through a banking application installed in another personal portable device like a smartphone or a connected watch for instance.

In the case of digital or virtual payment instruments, all their payment parameters can be retrieved by the user from a banking application installed in their personal portable device or through a card management system hosted by a remote server.

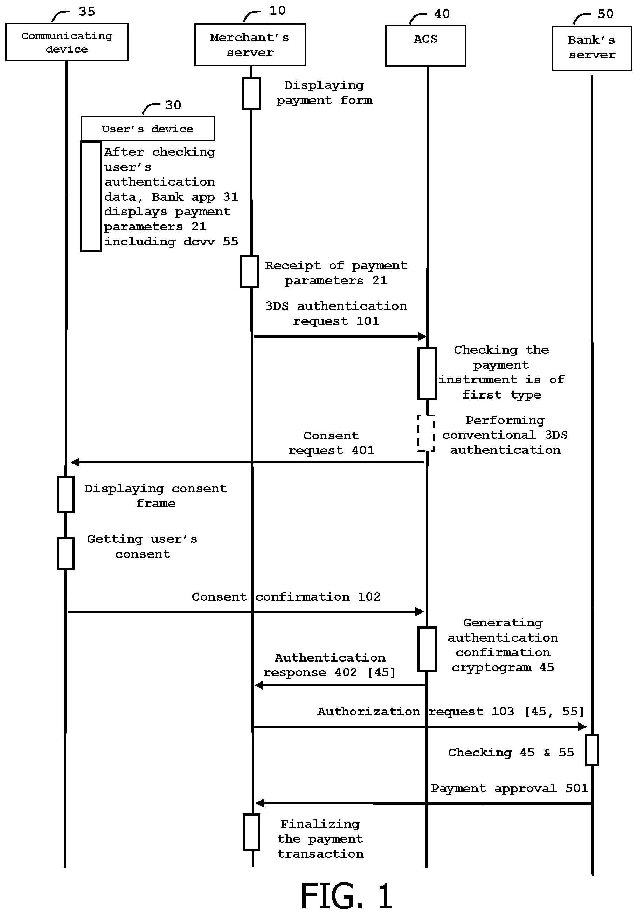

Figure 1 depicts a flow diagram for managing an online payment transaction according to an example of the invention.

The customer uses a communicating device 35 to connect a merchant server 10 giving access to a service which can be the delivery of physical product or the access to a digital data or feature for instance.

Once the user has selected the desired service, the merchant server 10 initiates an online payment transaction and triggers the display of a payment form on the web browser (or application) installed on the communicating device of the user. The communicating device can be a laptop or a smartphone for instance. By displaying the payment form, the merchant server requests the user to enter the payment parameters specific to a payment instrument assigned to the user.

At this stage the user can select an appropriate payment instrument if multiple payment instruments are available. In particular, the user may choose a payment instrument whose dynamic card security code is delivered to the user only after a successful strong customer authentication of the user based on authentication data provided by the user. Such a payment instrument is said as being of the first type (or having the first type). A payment instrument which is of the first type may rely on an external application which is designed to provide a valid dynamic card security code assigned to the payment instrument. Such an external application may be a bank application 31 hosted in a personal device 30 like a smartphone, a personal digital assistant (PDA) or a connected watch for instance. The personal device 30 can be the communicating device or another apparatus separate from the communicating device 35.

The bank application 31 can be designed to autonomously generate the dynamic card security code 55 or to retrieve the dynamic card security code 55 from a remote bank website.

When using a payment instrument of the first type, the user can retrieve the other payment parameters (e.g. PAN or expiry date) intrinsic to the payment instrument either directly from the payment instrument (when this one is a physical smart card) or through the bank application 31.

Alternatively, the user may choose a payment instrument which for which a valid dynamic card security code 55 can be provided to the user without requiring a successful strong customer authentication of the user. Such a payment instrument is said as being of the second type and may directly provide a valid dynamic card security code to the user through a screen (or speaker) embedded in the payment instrument for instance.

In the example of Figure 1, the bank application 31 is designed to make available the valid dynamic card security code 55 only after a successful check of authentication data provided by the user. In some embodiments, the bank application 31 may be designed to make available the payment parameters 21 intrinsic to the payment instrument only after a successful check of authentication data provided by the user.

Assuming the user has selected a payment instrument of the first type for the pending payment transaction, now the user provides their authentication data to the bank application 31 which in turn checks the validity of the authentication data. For instance, the user can enter a password or authenticate by presenting a biometric data.

After successfully checking the user's authentication data, the bank application 31 provides (for instance by display) a valid dynamic card security code 55 to the user. The dynamic card security code 55 may be a dynamic CW2 (card verification value), a dynamic CVC2 (card verification code), or a dynamic CID (card identification) for instance.

The bank application 31 may generate the dynamic card security code 55, retrieve the dynamic card security code from a prepopulated repository or request a distant server to provide a valid one.

Then, the user can type the payment parameters 21 (including the dynamic card security code 55) into the payment form so that the payment parameters 21 are sent to the merchant's server 10.

Upon getting the payment parameters 21, the merchant's server 10 requests a 3Domain Secure (also called 3DS, 3D Secure or 3-D Secure) authentication according to the 3DS protocol. For this, the merchant's server 10 sends an authentication request 101 to an access control server (ACS) 40 through a payment scheme network 80. In such a case, the payment scheme network 80 can include a Directory server 81 configured to determine the relevant ACS based on a subset of the primary account number (PAN) allocated to the payment instrument 20 and to route the authentication request 101 to the ACS 40 accordingly. The authentication request 101 comprises a subset of the payment parameters 21. The authentication request 101 may also comprise additional parameters like the payment amount, the currency, the date or the country where the sale takes place.

Upon receipt of the authentication request, the ACS 40 checks if the payment instrument 20 is of the first type by using the subset of the payment parameters 21 received through the authentication request 101. If the ACS 40 detects that the payment instrument 20 is of the first type, the ACS 40 decides to continue the payment transaction without performing the 3DS authentication on the payment instrument (i.e. without performing the authentication of the user of the payment instrument which is usually required by the traditional 3DS authentication) and sends back an authentication response 402 reflecting the agreement to pursue the payment transaction. Otherwise, the ACS 40 performs the conventional 3DS authentication process on the payment instrument to authenticate the user of the payment instrument.

It is to be noted that when the ACS 40 decides to continue the payment transaction without performing the 3DS authentication on the payment instrument, the ACS prevents execution of the traditional 3DS authentication process and the user is not requested to authenticate at this stage.

Preferably the subset of payment parameters 21 comprises the primary account number (PAN) allocated to the payment instrument 20 and the access control server 40 uses the PAN to check if the payment instrument 20 is of the first type. In some embodiments, the ACS 40 may access a repository which has been populated with the indication of the type of payment instrument for a fleet of payment instruments issued by one or more financial establishments. In some embodiments, the ACS 40 may query a bank server 50 to get the type (either first or second type) of the payment instrument 20.

In some embodiments, the ACS 40 can be previously personalized with one or more ranges of PAN corresponding to a set of payment instruments of the first type. Thus, the ACS may determine the type of the payment instrument by checking the first n digits of the PAN.

In some embodiments, the ACS 40 can be previously personalized with a list of PANs of payment instruments of the first type (or can have a secure access to such a list hosted in another device). Thus, the ACS may determine the type of the payment instrument by comparing the full PAN received in the 3DS authentication request with the content of the list.

In some embodiments, the 3DS authentication request may comprise the dynamic card security code and the ACS 40 can be configured to determine the type of payment instrument based on the received dynamic card security code. Thus, in the case of a payment instrument usable with both a static card security code and a dynamic card security code, the ACS can determine that a dynamic card security code has been used for the pending transaction and consider the payment instrument is of the first type.

In some embodiments, while the 3DS authentication flow is in progress, the access control server 40 sends to the communicating device 35 assigned to the user 60 a consent request 401 requesting a consent of the user to pursue the payment transaction. In turn, the communicating device 35 triggers the display of a request for consent. Upon obtaining the consent of the user to pursue the payment transaction via its user interface, the communicating device 35 sends to the ACS 40 a confirmation message 102 containing a confirmation of the user's consent. In turn, the access control server 40 generates an authentication value 45 and includes this authentication value 45 in the authentication response 402 before sending it to the merchant's server 10. The authentication value 45 may contain a cryptogram reflecting a confirmation of the successful authentication of the user (or the payment instrument). The authentication value 45 may provide a way, during authorization processing, for the authorization system to validate the integrity of the authentication result. The algorithm(s) used to generate and check the authentication value 45 is/are defined by the underlying payment system used to perform the payment transaction.

In some embodiment, the authentication value 45 may be an Account Authentication Value (AAV) as defined by Mastercard^{®} Specifications or a Cardholder Authentication Verification Value (CAW) as defined by Visa^{®} Specifications.

In some embodiments, the consent request 401 may include an inline frame element (iframe) comprising a message requesting the consent of the user and the communicating device may display the iframe provided by the ACS 40.

In some embodiments, a merchant's application installed in the communicating device 35 of the user may display a text (requesting the consent of the user) coming from the ACS in a manner defined by the 3DS specifications. Such a case is well-suited for mobile environment where a phone hosts the merchant's application.

Preferably, the ACS is configured to convey both the request and the response for getting the consent of the user through the Out-Of-Band (OOB) flow of the 3DS mechanism which was initially designed for authenticating the user. In other words, the ACS may use the 3DS OOB authentication flow to get the consent of the user to continue the payment transaction instead of authenticating the user. For instance, the ACS may use the 3DS OOB authentication flow (also called OOB challenge flow) to trigger the display of a message requesting the consent of the user (on the communicating device of the user) so that the user can give their consent just by a click which triggers the sending of the consent response to the ACS.

In order to finalize the pending transaction, a conventional flow can be applied in which the merchant's server 10 requests the authorization from the bank authorization server 50 to complete the payment transaction. For example, upon receipt of the authentication response 402, the merchant server 10 may send to a bank authorization server 50 an authorization request 103 including both the dynamic card security code 55 and the authentication value 45 (and possibly other payment parameters 21 and additional transaction parameters like the amount or the date). The merchant server 10 may send the authorization request 103 to the payment scheme network 80 whose gateway 82, in turn, may forward the authorization request 103 to the bank authorization server 50.

After successfully validating both the dynamic card security code and the authentication confirmation value, the bank authorization server 50 may send a payment approval message 501 to the merchant server 10. Upon receipt of the payment approval message 501 the merchant server 10 may finalize the payment transaction and inform the customer accordingly.

It is to be noted that, by successfully checking the dynamic card security code 55, the bank authorization server 50 ensures that the user has been authenticated initially through the bank application 31. Furthermore, by successfully checking the authentication value 45 the bank authorization server 50 ensures that the user gave their consent to the purchase.

In some embodiments, the dynamic card security code 55 can be generated to be valid for a predefined period, a limited cumulative sum of money (i.e. amount spent over several multiple transactions), a limited number of payment transactions, or any combination of these limiting parameters.

It is to be noted that the bank authorization server 50 may send the payment approval message 501 to the merchant server 10 through the payment network of a payment third party (e.g. a payment scheme network) providing a domestic or an international trusted payment system.

Thanks to some embodiments of the invention, the access control server (ACS) can securely generate and send to the merchant's server the authentication value 45 which indicates that the user has been duly authenticated and agreed to continue the payment transaction. The ACS relies on the fact that only a genuine user could have accessed the dynamic card security code since delivery of the dynamic card security code is conditional on the secure presentation of the authentication data assigned to the user. The authentication data can be secret value (like a password or a PIN code for instance) or a biometric data (like a fingerprint or a face for instance). Based on the authentication value 45, the merchant's server can continue the pending transaction by requesting authorization from the server of the bank that issued the involved payment instrument. Thus, the user of the payment instrument is relieved of the particular action to authenticate (i.e. no second action to be carried out by the client) during the 3DS authentication phase where the ACS checks the authenticity of the user.

From the point of view of the user, the payment transaction is simpler to carry out and faster than a traditional payment transaction.

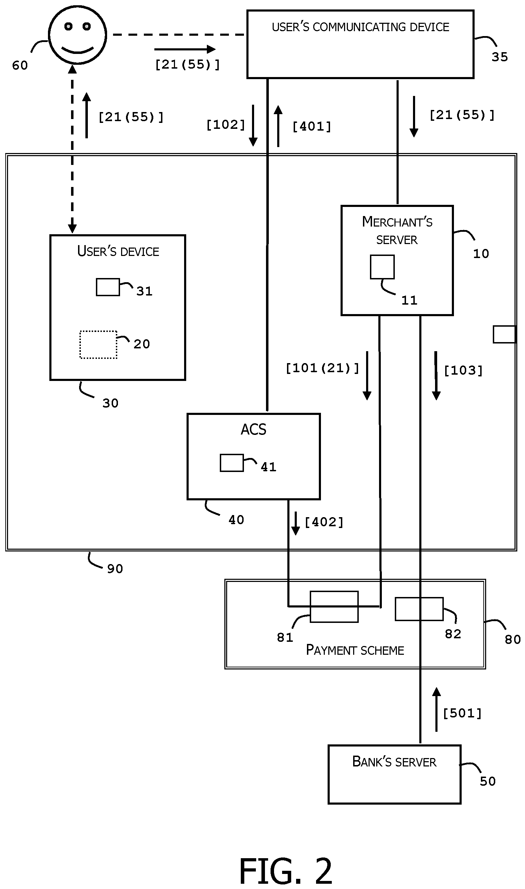

Figure 2 depicts a diagram of architecture of a payment system 90 for managing an online payment transaction according to an example of the invention.

The payment system 90 includes an access control server (ACS) 40, a user's device 30, and a merchant's server 10 giving access to a service.

The ACS can be implemented as a hardware server comprising a hardware processor and program instructions designed to provide the functions of the ACS required by the different embodiments of the invention when executed by the hardware processor.

The user's device 30 of the user 60 can be a desktop computer, a laptop, a phone, a tablet PC or a PDA for instance. Preferably, the user's device 30 is a smartphone.

In this example, the user accesses the merchant's server 10 through a communicating device 35 which is separate from the user's device 30. The communicating device 35 can be a desktop computer, a laptop, a phone, a tablet PC or a PDA for instance.

The server 10 of the merchant can be implemented as a hardware server comprising a hardware processor and a set of program instructions designed to provide the functions of the server 10 required by the different embodiments of the invention when executed by the hardware processor.

The payment system 90 is configured to manage payment transactions involving a payment instrument which can be either of a first type for which a bank application (separate from the payment instrument) is configured to provide a dynamic card security code allocated to the payment instrument, or of a second type where the payment instrument is configured to provide its own dynamic card security code.

In this example, the payment instrument 20 is a digital payment card hosted in the user's device 30. The payment instrument 20 is of the first type. The user's device 30 also hosts a banking application 31 which is designed to make available the payment parameters 21 assigned to payment instrument 20 only after a successful check of authentication data provided by the user. The payment parameters 21 include a valid dynamic card security code obtained by the banking application.

The banking application 31 may generate the dynamic card security code or retrieve the dynamic card security code from a remote server configured to supply a valid dynamic card security code for the payment instrument.

It can be noted that when the payment instrument is a physical chip card, some of the payment parameters (PAN or expiry date for instance) could be printed on the body of the card and can be easily retrieved by the user. However, the user cannot get a dynamic card security code directly from a payment instrument of the first type without having successfully completed a strong authentication of the user.

When a payment transaction starts, the merchant's server 10 is configured to request payment parameters specific to a payment instrument assigned to the user.

The merchant's server 10 can comprise a specific payment application 11.

Once the user enters the payment parameters 21 of the payment instrument 20 (after getting the from the banking application 31) into a form displayed on user's device 30, these payment parameters 21 are sent to the merchant's server 10 through a secure communication channel. Upon receipt of the payment parameters 21, the specific payment application 11 is configured to request a 3Domain Secure (3DS) authentication according to the 3DS protocol by sending an authentication request 101 to the access control server 40 via the payment scheme network 80. The authentication request 101 comprises a subset of the payment parameters 21.

In other words, the specific payment application 11 includes a subset of the payment parameters 21 in the authentication request 101.

The content of the subset may depend on prior agreement (i.e. a shared configuration) between the ACS 40 and the merchant's server 10. Preferably, the authentication request 101 comprises the PAN of the payment instrument. Alternatively, the authentication request 101 may comprise a subset of the PAN or any combination of data allowing to identify the payment instrument or its type.

The access control server 40 can comprise a specific 3DS application 41.

Upon receipt of the authentication request 101, the specific 3DS application 41 can be configured to check if the payment instrument 20 is of the first type by using the received subset of payment parameters 21. If the specific 3DS application 41 determines that the payment instrument 20 is of the first type, it is configured to decide to continue the pending transaction without performing the 3DS authentication on the payment instrument 20 (i.e. without performing the authentication of the user which is usually required by the traditional 3DS authentication) and to send back an authentication response 402 reflecting an agreement to pursue the payment transaction. If the specific 3DS application 41 determines that the payment instrument 20 is of the second type, the specific 3DS application 41 is configured to perform the 3DS authentication on the payment instrument to authenticate the user of the payment instrument. In this last case, the user is invited to reopen the banking application to authenticate again to complete the 3DS authentication process.

Preferably, the subset of payment parameters 21 comprises the primary account number (PAN) assigned to the payment instrument and the specific 3DS application 41 is configured to check if the payment instrument 20 is of the first type by using the PAN.

Preferably, the access control server 40 is configured to get user's consent to continue the payment transaction before sending the authentication response 402. Thus, the ACS 40 may be configured to send to the communicating device 35 assigned to the user 60 a consent request 401 requesting the consent of the user to pursue the pending payment transaction. Upon obtaining the consent of the user 60, the communicating device 35 assigned to the user 60 may be configured to send a confirmation 102 of the consent to the access control server 40 which in turn may be configured to generate and include an authentication value 45 in the authentication response 402.

In some embodiments, the consent request 401 includes an inline frame element (iframe) comprising a message requesting the consent of the user and the merchant server 10 triggers the display of the iframe on the communicating device 35.

It is to be noted that the user is requested to give their consent to complete the payment transaction with a specific merchant for a specific amount and a specific currency.

To complete the full transaction, upon receipt of the authentication response 402, the merchant server 10 can be configured to send to a bank authorization server 50 an authorization request 103 including both the dynamic card security code 55 and the authentication value 45. After successfully validating both the dynamic card security code and the authentication confirmation value, the bank authorization server 50 can be configured to send a payment approval 501 to the merchant server 10. Upon receipt of the payment approval 501, the merchant server 10 can be configured to finalize the transaction.

The merchant's server 10 and the user's device 30 each have a communication interface allowing them to communicate together and exchange messages or data. They may establish a communication channel through a combination of a wired network (like the Internet) and a Telecom network for instance.

The merchant's server 10, the ACS 40 and the bank's server 50 each comprise a communication interface able to communicate with a distant server via any combination of public or private network.

Some embodiments of the invention can be implemented independently of the exemption rules of 3DS specifications and independently of the amount of the payment transaction.

Some embodiments of the invention take advantage of the fact that the user can get a valid dynamic card security code for a payment instrument only after a successful user authentication based on secret data provided to the banking application 31 by the user. Therefore, the ACS may be exempted from checking the identity of the user during the 3DS authentication process since the validity of the dynamic card security code is checked by the bank server at the stage of the authorization checking process.

Some embodiments of the invention remain compliant with PSD2 regulation because the consent of the user is captured by the user's device (possibly via a dedicated iframe) and forwarded to the ACS directly or via the merchant's server.

## Claims

1. A computer-implemented method for managing a payment transaction initiated by a merchant server (10) giving access to a service, during the payment transaction said merchant server (10) requesting payment parameters (21) specific to a payment instrument (20) assigned to a user (60),
wherein the payment instrument is either of a first type for which a dynamic card security code (55) assigned to the payment instrument is delivered to the user only after a successful strong customer authentication of said user based on authentication data provided by the user, or of a second type for which the dynamic card security code is delivered to the user without a successful strong customer authentication of said user,
wherein said payment parameters (21) include said dynamic card security code,
wherein, upon getting said payment parameters, the merchant server (10) requests a 3Domain Secure, 3DS, authentication according to a 3DS protocol by sending an authentication request (101) to an access control server (40), said authentication request comprising a subset of said payment parameters (21),
wherein, upon receipt of the authentication request, the access control server checks if the payment instrument (20) is of said first type by using said subset and, if so decides to continue the payment transaction without performing the 3DS authentication on the payment instrument and sends back an authentication response (402) reflecting an agreement to pursue the payment transaction, otherwise performs the 3DS authentication on the payment instrument.

2. The method according to claim 1, wherein the access control server (40) sends to a communicating device (35) assigned to said user (60) a consent request (401) requesting a consent of the user to pursue the payment transaction,
wherein upon obtaining said consent, the communicating device sends a confirmation (102) of the consent to the access control server which in turn generates and includes in said authentication response (402) an authentication value (45).

3. The method according to claim 2, wherein the consent request (401) includes an inline frame element comprising a message requesting the consent of the user.

4. The method according to any preceding claims, wherein upon receipt of the authentication response (402), the merchant server (10) sends to a bank authorization server (50) an authorization request (103) including both the dynamic card security code (55) and the authentication value (45), and
wherein after successfully validating both the dynamic card security code and the authentication confirmation value, the bank authorization server sends a payment approval (501) to the merchant server (10).

5. The method according to any preceding claims, wherein said subset comprises a primary account number and wherein the access control server (40) checks if the payment instrument (20) is of said first type by using said primary account number.

6. The method according to any preceding claims, wherein the dynamic card security code (55) is valid for a predefined period, a limited cumulative sum of money, or a limited number of transactions.

7. The method according to any preceding claims, wherein the payment instrument is a payment chip card, a payment bracelet, a payment ring, a digital payment card hosted by the device or a virtual payment card whose payment parameters are accessible by the user through a card management system.

8. A payment system (90) comprising an access control server (40), and a merchant server (10) giving access to a service and configured to request payment parameters (21) specific to a payment instrument (20) assigned to a user (60) during a payment transaction,
wherein the payment instrument is either of a first type for which a dynamic card security code (55) assigned to the payment instrument is delivered to the user only after a successful strong customer authentication of said user based on authentication data provided by the user, or of a second type for which the dynamic card security code is delivered to the user without a successful strong customer authentication of said user,
wherein said payment parameters (21) include said dynamic card security code,
wherein, upon getting said payment parameters, the merchant server (10) is configured to request a 3Domain Secure, 3DS, authentication according to a 3DS protocol by sending an authentication request (101) to said access control server (40), said authentication request comprising a subset of said payment parameters (21),
wherein, upon receipt of the authentication request, the access control server is configured to check if the payment instrument (20) is of said first type by using said subset and, if so to decide to continue the transaction without performing the 3DS authentication on the payment instrument and to send back an authentication response (402) reflecting an agreement to pursue the payment transaction, otherwise to perform the 3DS authentication on the payment instrument.

9. The payment system according to claim 8, wherein the access control server (40) is configured to send to a communicating device (35) assigned to said user (60) a consent request (401) requesting a consent of the user to pursue the payment transaction,
wherein upon obtaining said consent, the communicating device is configured to send a confirmation (102) of the consent to the access control server (40) which in turn is configured to generate and include an authentication value (45) in said authentication response (402) .

10. The payment system according to claim 9, wherein the consent request (401) includes an inline frame element comprising a message requesting the consent of the user.

11. The payment system according to any claims 8 to 10, wherein upon receipt of the authentication response (402), the merchant server (10) is configured to send to a bank authorization server (50) an authorization request (103) including both the dynamic card security code (55) and the authentication value (45), and
wherein after successfully validating both the dynamic card security code and the authentication confirmation value, the bank authorization server (50) is configured to send a payment approval (501) to the merchant server (10).

12. The payment system according to any claims 8 to 11, wherein said subset comprises a primary account number and wherein the access control server (40) is configured to check if the payment instrument (20) is of said first type by using said primary account number.

13. The payment system according to any claims 8 to 12, wherein the dynamic card security code (55) is valid for a predefined period, a limited cumulative sum of money, or a limited number of transactions.

14. The payment system according to any claims 8 to 13, wherein the payment instrument is a payment chip card, a payment bracelet, a payment ring, a digital payment card hosted by the device or a virtual payment card whose payment parameters are accessible by the user through a card management system.

15. The payment system according to any claims 8 to 14, wherein the dynamic card security code (55) is provided either by a bank application (31) hosted in a device (30) of the user, or by the payment instrument.
